Europäisches Patentamt

European Patent Office

Office européen des brevets

(19)

(11) Veröffentlichungsnummer: **0 186 840**
**B1**

(12) **EUROPÄISCHE PATENTSCHRIFT**

(45) Veröffentlichungstag der Patentschrift:
13.07.88

(51) Int. Cl.⁴: **B 60 K 20/04,** F 16 H 57/06

(21) Anmeldenummer: 85116018.4

(22) Anmeldetag: 17.12.85

(54) **Lagergehäuse für Kraftfahrzeug-Gangschalthebel mit Rückwärtsgangsperre.**

(30) Priorität: 18.12.84 DE 8437043 U

(43) Veröffentlichungstag der Anmeldung:
09.07.86 Patentblatt 86/28

(45) Bekanntmachung des Hinweises auf die Patenterteilung:
13.07.88 Patentblatt 88/28

(84) Benannte Vertragsstaaten:
AT BE CH FR GB IT LI NL SE

(56) Entgegenhaltungen:
DE - U - 8 322 840

(73) Patentinhaber: FHS STAHLVERFORMUNG GMBH,
Arnsberger Strasse 10-12 Postfach 413, D-5860 Iserlohn
(DE)

(72) Erfinder: Strohmeyer, Erich, Carl-Orff-Strasse 27,
D-3352 Einbeck (DE)
Erfinder: Marschhausen, Karl-Heinz, Schützenstrasse 7,
D-3354 Dassel (DE)

(74) Vertreter: Oedekoven, Wolf-Dieter, Dipl. Ing.,
Erhardtstrasse 8/V, D-8000 München 5 (DE)

## Beschreibung

Die Erfindung bezieht sich auf ein Lagergehäuse für Kraftfahrzeug-Gangschalthebel mit Rückwärtsgangsperre, welches einen Anschlag für ein Sperrglied des Gangschalthebels aufweist, das zum Einlegen des Rückwärtsganges vom Anschlag weg bewegbar ist.

Gangschalthebel für Kraftfahrzeuge, insbesondere Personenkraftfahrzeuge, mit Rückwärtsgangsperre, welche das unbeabsichtigte Einlegen des Rückwärtsganges verhindern soll, sind bekannt. In der Regel weisen sie ein Sperrglied auf, welches mit einem Anschlag am Lagegehäuse, in dem der Gangschalthebel schwenkbar gelagert ist, derart zusammenwirkt, dass der Gangschalthebel erst dann in die zum Einlegen des Rückwärtsganges erforderliche Stellung geschwenkt werden kann, wenn zuvor das Sperrglied vom Anschlag weg bewegt worden ist, was mit Hilfe eines am Gangschalthebel vorgesehenen Betätigungsorgans geschieht. Der Anschlag für das Sperrglied des Gangschalthebels ist am Lagergehäuse selbst ausgebildet (DE-U-8 322 840).

Der Erfindung liegt die Aufgabe zugrunde, ein Lagergehäuse für Kraftfahrzeug-Gangschalthebel mit Rückwärtsgangsperre der eingangs angegebenen Art zu schaffen, welches auf einfache Weise mit dem Anschlag für das Sperrglied des Gangschalthebels versehen werden kann.

Diese Aufgabe ist durch die im Patentanspruch 1 angegebenen Merkmale gelöst. Vorteilhafte Ausgestaltungen des erfindungsgemässen Lagergehäuses für Kraftfahrzeug-Gangschalthebel mit Rückwärtsgangsperre sind in den abhängigen Patentansprüchen angegeben.

Beim erfindungsgemässen Lagergehäuse für Kraftfahrzeug-Gangschalthebel mit Rückwärtsgangsperre ist der Anschlag für das Sperrglied des Gangschalthebels an einem gesonderten Ring vorgesehen, welcher auf oder in einen hülsenförmigen, vom Gangschalthebel durchgesetzten Gehäuseansatz auf- bzw. einsteckbar und mit dem Gehäuseansatz verrastbar ist, wobei der Ring vorzugsweise aus Kunststoff besteht, während der Gehäuseansatz ebenso wie das übrige Lagergehäuse aus Metall hergestellt ist. Auf diese Weise ist es insbesondere möglich, einen im wesentlichen einheitlichen Grundkörper für Lagergehäuse von Kraftfahrzeug-Gangschalthebeln ohne Rückwärtsgangsperre und mit in unterschiedlicher Gangschalthebelschwenkstellung wirksam werdender Rückwärtsgangsperre zu verwenden. Um ein Lagergehäuse für Kraftfahrzeug-Gangschalthebel mit Rückwärtsgangsperre zu erhalten, braucht am Grundkörper nur der Ring mit dem entsprechend derjenigen Schwenkstellung des Gangschalthebels positionierten Anschlag für das Sperrglied des Gangschalthebels angebracht zu werden, in welcher die Rückwärtsgangsperre wirksam werden soll. Das erfindungsgemässe Lagergehäuse für Kraftfahrzeug-Gangschalthebel mit Rückwärtsgangsperre ist also ohne Schwierigkeiten an die unterschiedlichsten Gangschalthebel-Schaltschemata anpassbar. Der mit dem Anschlag für das Sperrglied des Gangschalthebels versehene Ring kann aus Kunststoff leicht hergestellt werden und ist auch leicht zu montieren. Bei der Herstellung aus Kunststoff ergibt sich ferner der Vorteil, dass ein geringes Gewicht gewährleistet ist und der Ring Geräusche dämpfen kann.

Nachstehend ist eine Ausführungsform des erfindungsgemässen Lagergehäuses für Kraftfahrzeug-Gangschalthebel mit Rückwärtsgangsperre anhand von Zeichnungen beispielsweise beschrieben. Darin zeigt schematisch:

Fig. 1 einen Längsschnitt eines Kraftfahrzeug-Gangschalthebels mit Rückwärtsgangsperre, welcher in einem erfindungsgemässen Lagergehäuse schwenkbar gelagert ist;

Fig. 2 eine Draufsicht auf den Ring des Lagergehäuses gemäss Fig. 1; und

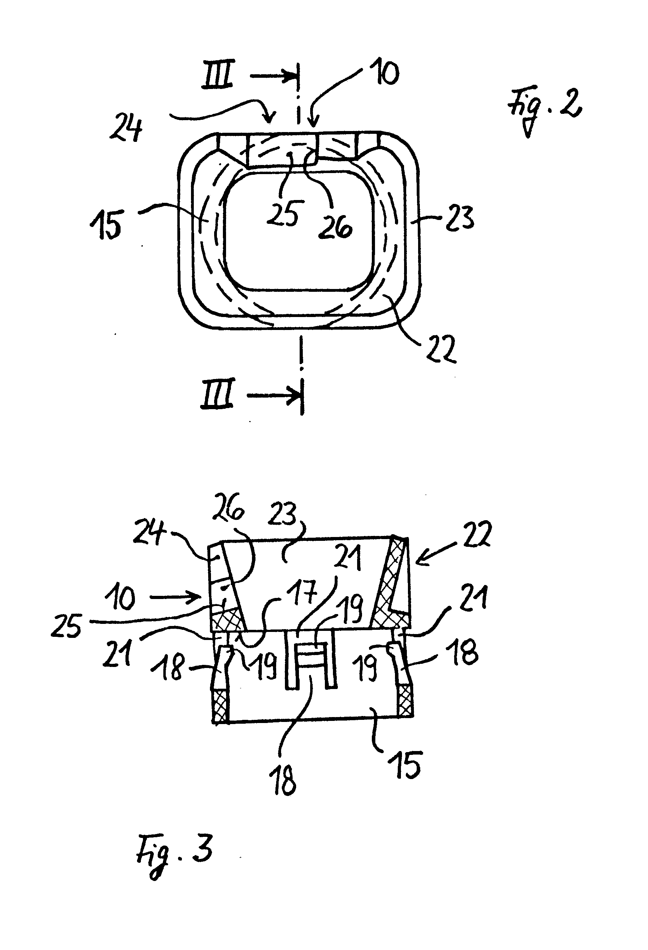

Fig. 3 den Schnitt entlang der Linie III-III in Fig. 2.

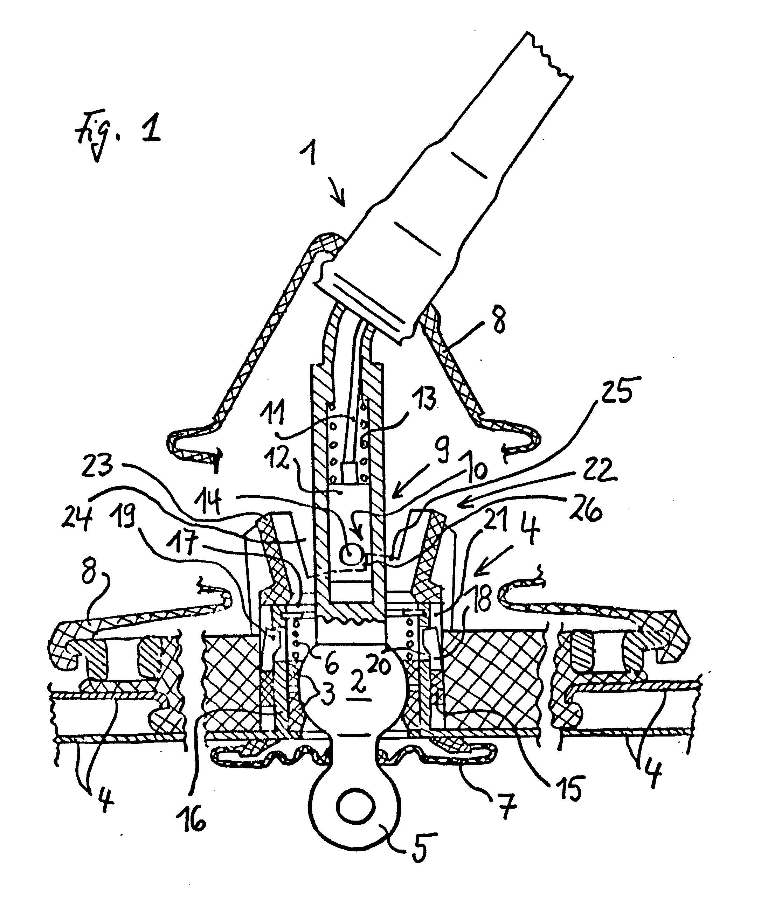

Der Gangschalthebel 1 ist mit einem kugelförmigen Abschnitt 2 versehen und mittels desselben über eine Lagerschale 3 in einem Lagergehäuse 4 schwenkbar gelagert, so dass er sowohl in der Zeichnungsebene von Fig. 1 als auch senkrecht zu derselben verschwenkt werden kann, um mit dem unteren Ende 5 das Zahnräderwechselgetriebe eines Kraftfahrzeugs in dessen verschiedene Gänge zu schalten. Die Lagerschale 3 besteht aus mehreren Segmenten, welche durch eine Schraubendruckfeder 6 gegen den kugelförmigen Abschnitt 2 des Gangschalthebels 1 gedrückt sind. Zwischen dem unteren Ende 5 des Gangschalthebels 1 und dem Lagergehäuse 4 ist ein Dichtungsbalg 7 vorgesehen, zwischen dem vom Lagergehäuse 4 nach oben abstehenden Schaft des Gangschalthebels 1 und dem Lagergehäuse 4 ein weiterer Dichtungsbalg 8.

Zur Gewährleistung einer Rückwärtsgangsperre ist der Gangschalthebel 1 mit einem Sperrglied 9 versehen, welches mit einem Anschlag 10 des Lagergehäuses 4 zusammenwirkt und von letzterem erst weg bewegt werden muss, bevor der Rückwärtsgang eingelegt werden kann. Dazu weist der Gangschalthebel 1 ein Betätigungsorgan auf, welches über ein innerhalb des hohl ausgebildeten Gangschalthebels 1 verlaufendes Zugglied 11 mit einem im Gangschalthebel 1 axial verschiebbar angeordneten Zapfen 12 verbunden ist, der durch eine Schraubendruckfeder 13 auf das untere Ende 5 des Gangschalthebels 1 zu in diejenige Stellung belastet ist, in welcher die Rückwärtsgangsperre wirksam ist, der Rückwärtsgang also nicht eingelegt werden kann. Der Zapfen 12 ist mit einem Querbolzen 14 versehen, welcher mit einem Ende seitlich aus dem Gangschalthebel 1 ragt, um mit dem Anschlag 10 des Lagergehäuses 4 zusammenwirken und somit das eigentliche Sperrglied 9 zu bilden.

Der Anschlag 10 des Lagergehäuses 4 ist an einem gesonderten Ring 15 aus Kunststoff vorgesehen, welcher auf einen hülsenförmigen Gehäuseansatz 16 aufgeschoben oder aufgesteckt und mit dem Gehäuseansatz 16 verrastet ist, welcher die Lagerschale 3 umschliesst und ebenso wie das restliche Lagergehäuse 4 aus Metall besteht. Der Ring 15 liegt mit einer Schulter 17 an der Stirnfläche des Gehäuseansatzes 16 an und ist in dieser Stellung durch Rastzungen 18 auf dem Gehäuseansatz 16 gehalten, welche mit ihren freien Enden 19 in entsprechende Rastlöcher 20 des Gehäuseansatzes 16 eingreifen.

Die Rastzungen 18 des Rings 15 sind einstückig mit demselben ausgebildet, erstrecken sich jeweils in einer Öffnung 21 des Rings 15 in Längsrichtung desselben auf dessen Schultern 17 zu und können seitlich federn, so dass die freien, beim Aufstecken oder Aufschieben des Rings 15 auf den Gehäuseansatz 16 nachlaufenden Enden 19 der Rastzungen 18 dann zunächst radial in die Öffnungen 21 des Rings 15 einfedern und anschliessend wieder in die Ausgangsstellung zurückfedern können, um in die Rastlöcher 20 des Gehäuseansatzes 16 einzutreten und den Ring 15 auf demselben festzuhalten, wie in Fig. 1 dargestellt. Der Ring 15 und der Gehäuseansatz 16 sind zylindrisch ausgebildet. Die Rastzungen 18 und die Rastlöcher 20 sind in Umfangsrichtung des Ringes 15 bzw. des Gehäuseansatzes 16 gleichmässig verteilt.

Der Ring 15 ist mit einem vom Gehäuseansatz 16 weg ragenden Vorsprung 22 versehen, an welchem der Anschlag 10 für das Sperrglied 9 des Gangschalthebels 1 vorgesehen ist. Der Vorsprung 22 ist als zum Ring 15 koaxiale Hülse 23 ausgebildet, welche eine Ausnehmung 24 zur Aufnahme des Sperrgliedes 9 aufweist. Deren Boden 25 ist mit einer Stufe 26 versehen, welche den Anschlag 10 für das Sperrglied 9 des Gangschalthebels 1 bildet.

Wenn der Rückwärtsgang eingelegt werden soll, dann muss der Gangschalthebel 1 aus der in Fig. 1 wiedergegebenen Stellung im Uhrzeigersinn verschwenkt werden, was erst möglich ist, wenn die Rückwärtsgangsperre aufgehoben worden ist. Dazu wird das erwähnte Betätigungsorgan des Gangschalthebels 1 bewegt, um über das Zugglied 11 den Zapfen 12 entgegen der Wirkung der Schraubendruckfeder 13 in Längsrichtung des Gangschalthebels 1 zu verschieben und den Querbolzen 14 entsprechend zu bewegen, so dass das Sperrglied 9 über die Stufe 26 hinweg gehoben wird und den Anschlag 10 verlässt. Der Boden 25 der Ausnehmung 24 des hülsenförmigen Vorsprungs 22 des Rings 15 ist beiderseits der Stufe 26 gekrümmt ausgebildet, so dass der Querbolzen 14 mit dem aus dem Gangschalthebel 1 ragenden Ende darauf gleiten kann.

Abwandlungen von der dargestellten und geschilderten Ausführungsform sind möglich. So ist es nicht unbedingt erforderlich, dass der Ring 15 und der Gehäuseansatz 16 zylindrisch ausgebildet sind, sondern können sie auch eine andere Querschnittsgestalt aufweisen, wie beispielsweise einen elliptischen, quadratischen oder rechteckigen Querschnitt. Auch können der Ring 15 und der Gehäuseansatz 16 so ausgebildet werden, dass der Ring 15 in den Gehäuseansatz 16 eingesteckt oder eingeschoben werden kann, um dann mit dem Gehäuseansatz 16 zu verrasten. Ferner ist es nicht unbedingt erforderlich, dass der Vorsprung 22 hülsenförmig ausgebildet ist, sondern kann er beispielsweise auch nur als eine Wand ausgebildet werden, welche sich auf derjenigen Seite des Gangschalthebels 1 erstreckt, an welcher der Querbolzen 14 aus demselben ragt, und an welcher die Stufe 26 auf der dem Gehäuseansatz 16 abgewandten Seite der Wand ausgebildet ist. Schliesslich ist es durchaus möglich, den Anschlag 10 am Ring 15 auch anders anzuordnen, wenn die Rückgangsperre in einer anderen Schwenkstellung des Gangschalthebels 1 wirksam sein muss, ebenso wie es möglich ist, das Sperrglied 9 und den Anschlag 10 zum Sperren eines anderen Ganges heranzuziehen, insbesondere des fünften Ganges oder des Eilganges eines damit ausgestatteten Zahnräderwechselgetriebes für Kraftfahrzeuge.

Die Rastzungen 18 des Rings 15 und die Rastlöcher 20 des Gehäuseansatzes 16 müssen nicht unbedingt gleichmässig in Umfangsrichtung des Lagergehäuses 4 verteilt sein, sondern können auch in anderer Verteilung angeordnet werden, ebenso wie es grundsätzlich auch möglich ist, die Rastzungen 18 am Gehäuseansatz 16 und die Rastlöcher 20 am Ring vorzusehen.

**Patentansprüche**

1. Lagergehäuse für Kraftfahrzeug-Gangschalthebel mit Rückwärtsgangsperre, welches einen Anschlag (10) für ein Sperrglied (9) des Gangschalthebels (1) aufweist, das zum Einlegen des Rückwärtsganges vom Anschlag (10) wegbewegbar ist, dadurch gekennzeichnet, dass der Anschlag (10) an einem gesonderten Ring (15) vorgesehen ist, welcher auf oder in einem hülsenförmigen, vom Gangschalthebel (1) durchgesetzten Gehäuseansatz (16) sitzt und mit demselben verrastet ist.

2. Lagergehäuse nach Anspruch 1, dadurch gekennzeichnet, dass der Ring (15) aus Kunststoff und der Gehäuseansatz (16) aus Metall besteht.

3. Lagergehäuse nach Anspruch 1 oder 2, dadurch gekennzeichnet, dass der Ring (15) in Längsrichtung verlaufende, seitlich federnde Rastzungen (18) aufweist, welche mit den freien, beim Auf- bzw. Einstecken des Ringes (15) auf bzw. in den Gehäuseansatz (16) nachlaufenden Enden (19) in entsprechende Rastlöcher (20) des Gehäuseansatzes (16) eingreifen.

4. Lagergehäuse nach Anspruch 3, dadurch gekennzeichnet, dass der Ring (15) sowie der Gehäuseansatz (16) zylindrisch ausgebildet und die Rastzungen (18) sowie die Rastlöcher (20) in Umfangsrichtung des Ringes (15) bzw. des Gehäuseansatzes (16) gleichmässig verteilt sind.

5. Lagergehäuse nach einem der vorstehenden Ansprüche, dadurch gekennzeichnet, dass der Anschlag (10) an einem vom Gehäuseansatz (16) wegragenden Vorsprung (22) des Ringes (15) vorgesehen ist.

6. Lagergehäuse nach Anspruch 5, dadurch gekennzeichnet, dass der Anschlag (10) von einer Stufe (26) gebildet ist, welche am Vorsprung (22) auf dessen dem Gehäuseansatz (16) abgewandter Seite ausgebildet ist und über welche das von einem im Gangschalthebel (1) in Längsrichtung desselben bewegbaren Querbolzen (14) gebildete Sperrglied (9) hinweghebbar ist.

7. Lagergehäuse nach Anspruch 6, dadurch gekennzeichnet, dass der Vorsprung (22) als zum Ring (15) koaxiale Hülse (23) mit einer Ausnehmung (24) zur Aufnahme des Sperrgliedes (9) ausgebildet ist, deren Boden (25) mit der Stufe (26) versehen ist.

## Claims

1. Socket housing for motor vehicle gear levers with a reverse gear block having a stop (10) for a blocking member (9) on the gear lever (1), the blocking member being capable of being moved clear of the stop (10) for engagement of reverse gear, characterised in that the stop (10) is provided on a separate ring (15) which sits on or in a sleeve-shaped housing extension (16) through which the gear lever (1) passes, and is keyed to it.

2. Socket housing according to claim 1, characterised in that the ring (15) is made of plastics and the housing extension (16) is made of metal.

3. Socket housing according to claim 1 or 2 characterised in that the ring (15) has laterally resilient detent tongues (18) which extend longitudinally and which, following on plugging of the ring (15) onto or into the housing extension (16), engage with their free ends (19), in corresponding detent holes (20) in the housing extension (16).

4. Socket housing according to claim 3 characterised in that the ring (15) and the housing extension (16) are made cylindrical and the detent tongues (18) as well as the detent holes (20) are distributed uniformly around the periphery of the ring (15) and of the housing extension (16) respectively.

5. Socket housing according to one of the foregoing claims characterised in that stop (10) is provided on a projection (22) of the ring (15) extending away from the extension (16) of the housing.

6. Socket housing according to claim 5 characterised in that stop (10) is formed by a step (26) which is formed on that side of the projection (22) which faces away from the extension (16) of the housing and over which the blocking member (9) formed by a transverse pin (14) movable in a longitudinal direction in the gear lever (1) can be lifted clear.

7. Socket housing according to claim 6 characterised in that the projection (22) is formed as a sleeve (23) coaxial with the ring (15) and having a notch (24) to receive the blocking member (9), the floor (25) of the notch being provided with the step (26).

## Revendications

1. Boîtier d'articulation pour levier de vitesses de véhicule automobile équipé d'un vorrouillage de marche arrière, qui présente une butée (10) destinée à arrêter un organe de verrouillage (9) du levier de vitesses (1) que l'ont peut écarter de la butée (10) pour enclencher la marche arrière, caractérisé en ce que la butée (10) est prévue sur une bague distincte (15) qui est montée sur ou dans un collet (16) en forme de douille du boîtier qui est traversé par le levier de vitesses (1), et qui est verrouillée sur ce collet.

2. Boîtier d'articulation selon la revendication 1, caractérisé en ce que la bague (15) est en matière plastique et le collet (16) du boîtier en métal.

3. Boîtier d'articulation selon la revendication 1 ou 2, caractérisé par le fait que la bague (15) présente des languettes d'arrêt (18) s'étendant dans la direction longitudinale et capables de fléchir élastiquement vers le côté, qui s'engagent, par leurs extrémités libres (19), situées en position arrière lorsqu'on emboîte la bague (15) sur ou dans le collet (16) du boîtier, dans des trous d'arrêt correspondants (20) du collet (16) du boîtier.

4. Boîtier d'articulation selon la revendication 3, caractérisé en ce que la bague (15) ainsi que le collet (16) du boîtier sont de configuration cylindrique et que les languettes d'arrêt (18) et les trous d'arrêt (20) sont uniformément répartis dans la direction circonférentielle de la bague (15) ou du collet (16) du boîtier, respectivement.

5. Boîtier d'articulation selon une des revendications précédentes, caractérisé par le fait que la butée (10) est prévue sur une saillie (22) de la bague (15) qui fait saillie dans le sens qui s'éloigne du collet (16) du boîtier.

6. Boîtier d'articulation selon la revendication 5, caractérisé en ce que la butée (10) est formée par un gradin (26) qui est formé sur la saillie (22), sur le côté de cette saillie qui est le plus éloigné du collet (16) du boîtier, et au-dessus de lequel on peut faire passer l'organe de verrouillage (9) formé par une broche transversale (14) qui peut se déplacer dans le levier de vitesses (1) dans la direction longitudinale de ce levier.

7. Boîtier d'articulation selon la revendication 6, caractérisé en ce que la saillie (22) est constituée par une douille (23) coaxiale à la bague (15) et munie d'un évidement (24) destiné à recevoir l'organe de verrouillage (9), et dont le fond (25) est muni de le gradin (26).

Fig. 1

Fig. 2

Fig. 3